# EUROPEAN PATENT SPECIFICATION

(11) **EP 3 142 758 B1**
(45) Date of publication and mention of the grant of the patent: **30.01.2019**
(21) Application number: 15732352.8
(22) Date of filing: 11.05.2015
(51) Int. Cl.: A63C 5/056

(54) **PROCESS FOR TREATING THE SURFACE OF SKI SOLES**
VERFAHREN ZUR BEHANDLUNG DER OBERFLÄCHE VON SKISOHLEN
PROCÉDÉ DE TRAITEMENT DE LA SURFACE DE SEMELLES DE SKI

(30) Priority: 12.05.2014 IT TO20140373
(43) Date of publication of application: 22.03.2017
(73) Proprietor: Environment Park S.p.A., 10121 Torino (IT)
(72) Inventor: GRIMALDI, Fabio Massimo, I-10133 Torino (IT); PALMI, Dino, I-13836 Cossato (Biella) (IT); D'ANGELO, Domenico, I-10129 Torino (IT); AIMO BOOT, Elisa, I-10072 Caselle (Torino) (IT)
(74) Representative: Gerbino, Angelo
(86) International application number: PCT/IB2015/053449
(87) International publication number: WO 2015/173714

(56) References cited:
- EP-A1- 0 117 536
- EP-A1- 0 117 536
- EP-A1- 0 319 435
- DE-A1-102004 027 683
- DE-A1-102004 027 683
- JP-A- 2009 077 932
- JP-A- 2009 077 932
- US-A- 4 321 295
- US-A- 4 321 295

## Description

The present invention relates to a process for treating the external surface of ski soles, in particular for competition skis and for high-performance skis.

As is known, these soles are now typically made of ultra-high molecular weight polyethylene (UHMWPE, with an average molecular weight of between 3×10⁶ and 6×10⁶ Da), which has been obtained via a sintering process. This process involves melting high molecular weight polyethylene powder mixed with additives in a cylindrical mould at a temperature of between 250°C and 350°C and a pressure of between 5 and 10 bar, depending on the density that it is desired to obtain. After a subsequent cooling phase, a moulded product of cylindrical shape is thus obtained, which is cut to the desired thickness using a feeder, giving rise to the sintered sole.

The cooling phase is performed slowly, so as to ensure the production of a UHMWPE polymer of high crystallinity, and, in the course of its production, the volume contraction associated with the formation of crystalline spherulites creates microvoids located on the zones of contact of these spherules.

The three-dimensional structure of the UHMWPE thus obtained is typically microalveolar with cavities partly occluded by polymer residues. In addition, the walls that define the alveolar structure have an irregular geometry and terminate on the apical part with microridges turned back towards the centre of structure.

This conformation makes the surface of the sole receptive with respect to ski wax that is typically applied by heating with an iron. However, on account of the pollutants introduced by the sintering process (which cannot be removed with solvents) and, above all, the fact that the abovementioned heating with an iron causes collapse towards the centre of the microridges, a considerable fraction of the volume theoretically available for receiving the ski wax is lost.

Document DE 10 2004 027683A discloses a process according to the preamble of claim 1.

The aim of the present invention is thus to provide a process for treating the external surface of ski soles made of ultra-high molecular weight polyethylene, which makes it possible to increase the amount of ski wax that can be absorbed.

This aim is achieved by means of a process for improving the adsorption properties of the external surface of a ski sole of ultra-high molecular weight polyethylene (UHMWPE) produced by sintering, said process comprising the successive steps of:
- treating said surface with a plasma jet, by using a process gas including air, and
- depositing on said surface a polyalkylsiloxane film, by a plasma treatment using an inert gas as carrier and an allylalkoxysilane as precursor.

The process of the invention makes it possible to remove the pollutants that occlude cavities of the alveolar structure of the sole and to reduce the microridges of the walls that have a tendency to collapse into these cavities following the heat treatment for the application of the ski wax. In particular, the external surface of the sole thus treated shows, on analysis with a light microscope, more abundant and cleaner cavities, proving that the factors limiting the volume available for the adsorption of ski wax have been removed, or at the very least reduced.

Moreover, the polyalkylsiloxane film deposited on the surface of the sole is uniform and very adherent to the subjacent UHMWPE, further promoting this adsorption.

On the whole, the process of the invention makes it possible to improve the adsorption properties to the extent that, using the same ski waxing methodology, the sole thus treated receives from 4 to 6 times more ski wax than an untreated sole.

Further, tests performed after ski waxing demonstrated a considerable increase in the sliding properties, greater abrasion resistance and a considerable increase in the time that the ski wax remains on the surface of the sole.

In preferred embodiments of the process of the invention, the abovementioned process gas is air or air enriched with oxygen and/or argon, the abovementioned inert gas is nitrogen, the abovementioned polyalkylsiloxane film has a thickness in the range between 80 and 200 nm, in particular about 150 nm, and/or the abovementioned allylalkoxysilane precursor is chosen from the group consisting of allyltrimethoxysilane, allyltriethoxysilane and mixtures thereof.

A further subject of the present invention is an ultra-high molecular weight polyethylene (UHMWPE) ski sole that has been subjected to the abovementioned process.

The soles of the invention may be used for both ordinary skis and competition and high-performance skis, obtaining optimum sliding properties lasting from 4 to 6 times longer.

Further advantages and characteristics of the present invention will emerge from the implementation examples that follow, which are given in a non-limiting manner.

### EXAMPLE 1

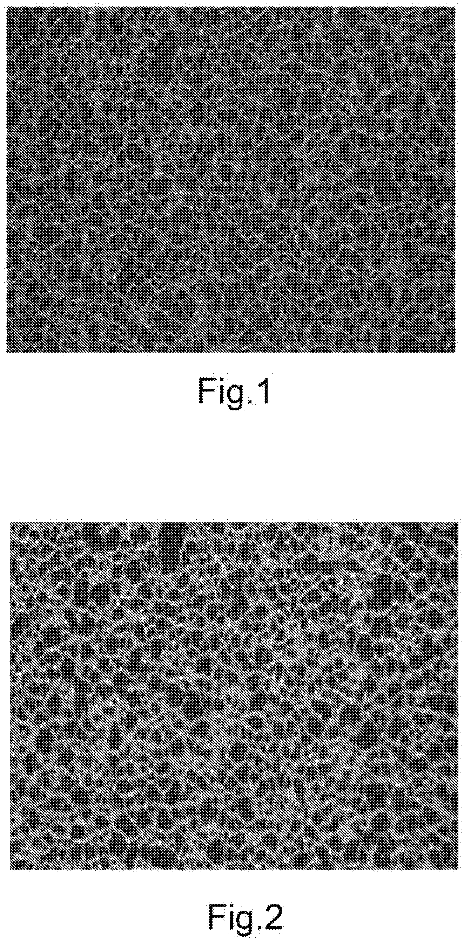

An ultra-high molecular weight polyethylene (UHMWPE) ski sole, produced by sintering and having an average molecular weight of about 6×10⁶ Da, is first treated with a plasma jet. This treatment is performed using air as process gas, for a time of 25 seconds, with a power of 650 W, and maintaining a temperature below 110°C at a distance of 10 mm from the gas supply nozzle. In this way, the surface of the sole is cleaned and activated. Figure 1 is a microscopy image of the surface thus treated.

The cleaned and activated surface is then subjected to a plasma deposition treatment which uses nitrogen as carrier and allyltrimethoxysilane as precursor, with a power of 650 W, for a time of 10 seconds and maintaining a temperature below 110°C at a distance of 10 mm from the precursor vaporization nozzle before contact with the ionized carrier gas. In this way, a polymethoxysilane film with a thickness of about 150 nm is deposited on said surface.

This film is then waxed via conventional means, in particular stabilized in an oven at 110°C and then treated while hot with paraffin (Basix HX 99).

Determination of the amount of the adsorbed ski wax is performed on samples 100 × 100 mm in size, which were first weighed prior to the plasma treatment, using an Orma BC model analytical balance.

Each sample, once treated with plasma, waxed and cooled, is given a spatula-effect decorative finish, cleaned with 99.5% diethyl ether and then weighed again.

The amount of wax adsorbed is obtained by the difference in weight of each sample between the two weighings to which it has been subjected. In this instance, the test samples showed a weight increase of 0.84-0.92 g.

### EXAMPLE 2

This example is performed in an entirely similar manner to the preceding example, the only difference being that allyltriethoxysilane is used as precursor, thus obtaining deposition of a polyethylsiloxane film.

The test samples showed a weight increase of 0.87-0.98 g.

### EXAMPLE 3

This example is performed in an entirely similar manner to the preceding example, the only difference being that a 50%/50% mixture of allyltrimethoxysilane and allyltriethoxysilane is used as precursor.

The test samples showed a weight increase of 0.84-0.96 g.

### COMPARATIVE EXAMPLES

For the purpose of demonstrating the advantages provided by the invention, variously treated samples were subjected to the test indicated above, giving the following results:
- samples not subjected to any treatment, for the surface of which Figure 2 presents a microscopy image, showed a weight increase of 0.13-0.16 g;
- samples treated only with an air plasma showed a weight increase of 0.71-0.76 g;
- samples treated only with an air/Ar plasma showed a weight increase of 0.51-0.58 g;
- samples treated only with an Ar plasma showed a weight increase of 0.29-0.34 g;
- samples treated only with a nitrogen plasma showed a weight increase of 0.25-0.32 g.

From the data reported above, ratios are thus obtained between the respective weight increases, which may be up to 5.75:1, between the adsorption results of Example 1 and those of the untreated sample, and 6.125:1, between the adsorption results of Example 2 and those of the untreated sample.

Sliding tests were also performed, which demonstrated the existence of a direct proportionality between the amount of ski wax adsorbed and the time that this wax remains on the surface of the sole: a duration from 4 to 6 times longer under the same wear conditions was in fact found.

Needless to say, without prejudice to the principle of the invention, the implementation features and the embodiments may be varied widely with respect to that which has been described for purely illustrative purposes, without thereby departing from the scope of the invention as defined in the attached claims.

## Claims

1. Process for treating the external surface of a ski sole of ultra-high molecular weight polyethylene (UHMWPE) produced by sintering, comprising the step of depositing on said surface polyalkylsiloxane, said process being **characterised by** comprising the successive steps of:
- treating said surface with a plasma jet, by using a process gas including air, and
- depositing on said surface a polyalkylsiloxane film, by a plasma treatment using an inert gas as carrier and an allylalkoxysilane as precursor.

2. Process according to Claim 1, wherein said process gas is air or air enriched with oxygen and/or argon.

3. Process according to Claim 1 or 2, wherein said inert gas is nitrogen.

4. Process according to any one of the preceding claims, wherein said film has a thickness in the range between 80 and 200 nm, preferably about 150 nm.

5. Process according to any one of the preceding claims, wherein said allylalkoxysilane is chosen from the group consisting of allyltrimethoxysilane, allyltriethoxysilane and mixtures thereof.

6. Process according to any one of the preceding claims, wherein the step of depositing the polyalkylsiloxane film takes place immediately after the step of treatment with plasma jet.

7. Ski sole of UHMWPE which has been subjected to a process according to any one of the preceding claims.

## Patentansprüche

1. Verfahren zum Behandeln der äußeren Oberfläche einer Skisohle aus Polyethylen mit ultra-hohem Molekulargewicht (UHMWPE), welche durch Sintern hergestellt wird, umfassend den Schritt des Abscheidens von Polyalkylsiloxan auf die Oberfläche, wobei das Verfahren **gekennzeichnet ist durch** das Umfassen der aufeinander folgenden Schritte:
- Behandeln der Oberfläche mit einem Plasmastrahl unter Verwendung eines Prozessgases einschließlich Luft, und
- Abscheiden eines Polyalkylsiloxanfilms auf die Oberfläche, durch eine Plasmabehandlung unter Verwendung eines Inertgases als Träger und eines Allylalkoxysilans als Vorstufe.

2. Verfahren nach Anspruch 1, wobei das Prozessgas Luft ist oder Luft, welche mit Sauerstoff und/oder Argon angereichert ist.

3. Verfahren nach Anspruch 1 oder 2, wobei das Inertgas Stickstoff ist.

4. Verfahren nach einem der vorstehenden Ansprüche, wobei der Film eine Dicke in dem Bereich zwischen 80 und 200 nm aufweist, bevorzugt etwa 150 nm.

5. Verfahren nach einem der vorstehenden Ansprüche, wobei das Allylalkoxysilan ausgewählt ist aus der Gruppe bestehend aus Allyltrimethoxysilan, Allyltriethoxysilan und Mischungen davon.

6. Verfahren nach einem der vorstehenden Ansprüche, wobei der Schritt des Abscheidens des Polyalkylsiloxanfilms unmittelbar nach dem Schritt der Behandlung mit einem Plasmastrahl erfolgt.

7. Skisohle aus UHMWPE, welche einem Verfahren nach einem der vorstehenden Ansprüche unterzogen wurde.

## Revendications

1. Procédé de traitement de la surface externe d'une semelle de ski en polyéthylène de poids moléculaire ultra-élevé (UHMWPE) produite par frittage, comprenant l'étape de dépôt sur ladite surface d'un polyalkylsiloxane, ledit procédé étant **caractérisé en ce qu'**il comprend les étapes successives de :
- traitement de ladite surface avec un jet de plasma, en utilisant un gaz de procédé incluant de l'air, et
- dépôt sur ladite surface d'un film de polyalkylsiloxane, par un traitement par plasma en utilisant un gaz inerte comme vecteur et un allylalcoxysilane comme précurseur.

2. Procédé selon la revendication 1, dans lequel ledit gaz de procédé est l'air ou l'air enrichi en oxygène et/ou en argon.

3. Procédé selon la revendication 1 ou 2, dans lequel ledit gaz inerte est l'azote.

4. Procédé selon l'une quelconque des revendications précédentes, dans lequel ledit film présente une épaisseur située dans la plage entre 80 et 200 nm, de préférence d'environ 150 nm.

5. Procédé selon l'une quelconque des revendications précédentes, dans lequel ledit allylalcoxysilane est choisi dans le groupe constitué de l'allyltriméthoxysilane, de l'allyltriéthoxysilane et des mélanges de ceux-ci.

6. Procédé selon l'une quelconque des revendications précédentes, dans lequel l'étape de dépôt du film de polyalkylsiloxane a lieu immédiatement après l'étape de traitement avec un jet de plasma.

7. Semelle de ski de UHMWPE qui a été soumise à un procédé selon l'une quelconque des revendications précédentes.
